# EUROPEAN PATENT APPLICATION

(11) **EP 4 750 137 A1**
(43) Date of publication of application: **27.05.2026**
(21) Application number: 24844271.7
(22) Date of filing: 03.04.2024
(51) Int. Cl.: H04W 28/02

(54) **COMMUNICATION METHOD AND APPARATUS, AND STORAGE MEDIUM**

(30) Priority: 27.07.2023 CN 202310940808
(71) Applicant: ZTE Corporation, Shenzhen, Guangdong 518057 (CN)
(72) Inventor: TAN, Jie, Shenzhen, Guangdong 518057 (CN); LU, Ting, Shenzhen, Guangdong 518057 (CN); QIU, Zhihong, Shenzhen, Guangdong 518057 (CN); GAO, Yuan, Shenzhen, Guangdong 518057 (CN); SHA, Xiubin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/086053
(87) International publication number: WO 2025/020575

(57) **Abstract**

Disclosed in the present disclosure are a communication method and apparatus, and a storage medium. The method comprises: sending first instruction information to a base station, the first instruction information being used for instructing to request clock quality information; and receiving the clock quality information sent by the base station.

## Description

The present disclosure claims a priority to Chinese Patent Application No. 202310940808.7, and filed on July 27, 2023, the entire content of which is incorporated into the present application by reference.

### TECHNICAL FIELD

The present disclosure relates to the field of communication technologies, and in particular, to a communication method and apparatus, and a storage medium.

### BACKGROUND

A 5G system achieves network synchronization by referencing a clock signal emitted by a synchronization clock. The synchronization clock is generally generated by a master clock, the master clock usually obtains clock information from a global navigation satellite system (GNSS) receiver. Meanwhile, in order to satisfy a synchronization requirement even under fault conditions, a design of the synchronization clock generally includes an apparatus for addressing potential degradation of the GNSS clock signal. However, some deployments of the 5G system involve applications that are sensitive to any degradation of the clock signal. In this case, the 5G system may be enhanced to serve as a backup in the event of loss of its GNSS reference. For example, resilience enhancements of the 5G system may work in conjunction with different types of time sources to provide robust time synchronization.

To enable different types of time sources to work collaboratively in the 5G system, it is necessary to design a clock source switching mechanism in the 5G system, i.e., the 5G system shall support a mechanism for providing available alternative clock sources to a terminal (e.g., the 5G system includes clock sources such as capability, an atomic clock, an optical fiber synchronization, a terrestrial beacon system (TBS), GNSS, etc.).

### SUMMARY

In an aspect, a communication method is provided, applied to a terminal. The method includes:
sending first indication information to a base station; where the first indication information is used to indicate to request clock quality information; and
receiving the clock quality information sent from the base station.

In another aspect, a communication method is provided, applied to a base station. The method includes:
receiving first indication information sent from a terminal; where the first indication information is used to indicate to request clock quality information; and
sending the clock quality information to the terminal.

In another aspect, a communication method is provided, applied to a terminal. The method includes:
sending capability information to a base station, where the capability information is used to indicate that the terminal supports a QoE measurement and/or an RVQoE measurement for an extended reality (XR) service; and
receiving quality of experience (QoE) configuration information sent from the base station.

In another aspect, a communication method is provided, applied to a base station. The method includes:
receiving capability information sent from a terminal, where the capability information is used to indicate that the terminal supports a QoE measurement and/or an RVQoE measurement for an XR service; and
receiving QoE configuration information sent from a core network element.

In another aspect, a communication method is provided, applied to a source base station. The method includes:
sending first QoE configuration information to a target base station;
receiving second QoE configuration information sent from the target base station; and
sending the second QoE configuration information to a terminal.

In another aspect, a communication method is provided, applied to a target base station. The method includes:
receiving first QoE configuration information sent from a source base station; and
sending second QoE configuration information to the source base station.

In another aspect, a communication apparatus is provided, applied to a terminal. The communication apparatus includes:
a sending module, configured to send first indication information to a base station; where the first indication information is used to indicate to request clock quality information;
a receiving module, configured to receive the clock quality information sent from the base station.

In another aspect, a communication apparatus is provided, applied to a base station. The communication apparatus includes:
a receiving module, configured to receive first indication information sent from a terminal; where the first indication information is used to indicate to request clock quality information;
a sending module, configured to send the clock quality information to the terminal.

In another aspect, a communication apparatus is provided, applied to a terminal. The communication apparatus includes:
a sending module, configured to send capability information to a base station, where the capability information is used to indicate that the terminal supports a QoE measurement and/or an RVQoE measurement for an extended reality (XR) service;
a receiving module, configured to receive quality of experience (QoE) configuration information sent from the base station.

In another aspect, a communication apparatus is provided, applied to a base station. The communication apparatus includes:
a receiving module, configured to receive capability information sent from a terminal, where the capability information is used to indicate that the terminal supports a QoE measurement and/or an RVQoE measurement for an XR service;
the receiving module, further configured to receive QoE configuration information sent from a core network element.

In another aspect, a communication apparatus is provided, applied to a source base station. The communication apparatus includes:
a sending module, configured to send first QoE configuration information to a target base station;
a receiving module, configured to receive second QoE configuration information sent from the target base station;
the sending module, further configured to send the second QoE configuration information to a terminal.

In another aspect, a communication apparatus is provided, applied to a target base station. The communication apparatus includes:
a receiving module, configured to receive first QoE configuration information sent from a source base station;
a sending module, configured to send second QoE configuration information to the source base station.

In yet another aspect, a communication apparatus is provided. The communication apparatus includes: a memory and a processor; the memory is coupled with the processor; the memory is configured to store a computer program; and the processor, when executing the computer program, implements the communication method described in any one of the above aspects or embodiments.

In yet another aspect, a computer readable storage medium is provided and the computer readable storage medium has stored computer program instructions thereon, and the computer program instructions, when executed by a processor, implement the communication method described in any one of the above aspects or embodiments.

In yet another aspect, a computer program product is provided, the computer program product includes computer program instructions, and the computer program instructions, when executed by a processor, implement the communication method described in any one of the above aspects or embodiments.

### BRIEF DESCRIPTION OF THE DRAWINGS

In order to describe technical solutions in the present disclosure more clearly, the drawings that some embodiments of the present disclosure need to use, will be briefly introduced below. Obviously, the drawings in the following description are merely drawings of some embodiments of the present disclosure, and other drawings may be obtained according to these drawings for the ordinary skilled in the art.
FIG. 1 is a schematic diagram of an architecture of a communication system, provided by some embodiments of the present disclosure.
FIG. 2 is a schematic diagram of an architecture of another communication system, provided by some embodiments of the present disclosure.
FIG. 3 is a schematic diagram of an architecture of yet another communication system, provided by some embodiments of the present disclosure.
FIG. 4 is a flow chart of a communication method, provided by some embodiments of the present disclosure.
FIG. 5 is a flow chart of another communication method, provided by some embodiments of the present disclosure.
FIG. 6 is a flow chart of yet another communication method, provided by some embodiments of the present disclosure.
FIG. 7 is a flow chart of yet another communication method, provided by some embodiments of the present disclosure.
FIG. 8 is a flow chart of yet another communication method, provided by some embodiments of the present disclosure.
FIG. 9 is a flow chart of yet another communication method, provided by some embodiments of the present disclosure.
FIG. 10 is a flow chart of yet another communication method, provided by some embodiments of the present disclosure.
FIG. 11 is a flow chart of yet another communication method, provided by some embodiments of the present disclosure.
FIG. 12 is a flow chart of yet another communication method, provided by some embodiments of the present disclosure.
FIG. 13 is a flow chart of yet another communication method, provided by some embodiments of the present disclosure.
FIG. 14 is a flow chart of yet another communication method, provided by some embodiments of the present disclosure.
FIG. 15 is a flow chart of yet another communication method, provided by some embodiments of the present disclosure.
FIG. 16 is a flow chart of yet another communication method, provided by some embodiments of the present disclosure.
FIG. 17 is a flow chart of yet another communication method, provided by some embodiments of the present disclosure.
FIG. 18 is a flow chart of yet another communication method, provided by some embodiments of the present disclosure.
FIG. 19 is a structural schematic diagram of a communication apparatus, provided by some embodiments of the present disclosure.
FIG. 20 is a structural schematic diagram of another communication apparatus, provided by some embodiments of the present disclosure.
FIG. 21 is a structural schematic diagram of yet another communication apparatus, provided by some embodiments of the present disclosure.
FIG. 22 is a structural schematic diagram of yet another communication apparatus, provided by some embodiments of the present disclosure.
FIG. 23 is a structural schematic diagram of yet another communication apparatus, provided by some embodiments of the present disclosure.
FIG. 24 is a structural schematic diagram of yet another communication apparatus, provided by some embodiments of the present disclosure.
FIG. 25 is a structural schematic diagram of yet another communication apparatus, provided by some embodiments of the present disclosure.

### DETAILED DESCRIPTION

The following will describe the technical solutions in the present disclosure clearly and completely, in conjunction with the drawings in the present disclosure, and obviously, the described embodiments are only a part of the embodiments of the present disclosure, not all of the embodiments. Based on the embodiments in the present disclosure, all other embodiments obtained by those ordinary skilled without creative efforts shall fall within the protection scope of the present disclosure.

It should be noted that in the present disclosure, the words such as "exemplary/exemplarily" or "for example", etc., are used to present an example, illustration, or explanation. Any embodiment or design solution described with "exemplary/exemplarily" or "for example" in the present disclosure is not necessarily to be construed as preferred or advantageous over other embodiments or design solutions. Rather, the use of the words such as "exemplary/exemplarily" or "for example", etc., is intended to present relevant concepts in some manners.

Hereinafter, the terms such as "first", "second", etc., are used only for descriptive purposes and cannot be construed as indicating or implying relative importance or implicitly indicating the number of the indicated technical features. Thus, features defined with "first" or "second", etc., may explicitly or implicitly include one or more of the features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

In a resilient clock system, a base station is only able to provide clock quality information to a terminal when the terminal enters a connected state. Since a certain amount of time is required for handing over from other states to the connected state, the latency and power consumption of the terminal will be increased.

To address the above technical problem, the embodiments of the present disclosure provide a communication method, the concept of which is as follows: a terminal may send, in a non-connected state, first request information for indicating to request clock quality information to a base station, and then receive the clock quality information sent from the base station. In this way, the terminal may acquire the clock quality information in the non-connected state, which solves the technical problem that the terminal has to enter the connected state to acquire the clock quality information, and may reduce latency and save power consumption of the terminal.

A quality of experience (QoE) measurement and radio access network-visible QoE (RVQoE) measurement performed in an RAN refer to the measurement of the experience of users of the quality and performance of services (including aspects such as effectiveness and availability), so that operators may comprehensively evaluate the quality of service and performance based on QoE measurement results, find problems in the service, and adjust the communication network adaptively according to the problems in the service.

Currently, with the development of networks and the increasingly rapid pace of service updates, how to achieve QoE measurement and RVQoE measurement for newly added services has become an urgent problem to be solved.

To address the above technical problem, the embodiments of the present disclosure provide a communication method, the concept of which is as follows: a terminal may send capability information (for indicating that the terminal supports the QoE measurement and/or RVQoE measurement for newly added XR services) to a base station, so that the base station knows the measurement capability of the terminal. In this way, when the base station receives a QoE measurement task and/or RVQoE measurement task for the XR service, it may indicate the terminal to perform measurement.

In a connected mobility scenario, if a mobile terminal hands over from a source base station to a target base station in a process of QoE measurement, the target base station cannot know whether the ongoing QoE measurement needs to be paused or discarded, which will not ensure the integrity of the QoE report in the mobility scenario. Therefore, the current QoE measurement efficiency in the mobile scenario is low, resulting in a poor user experience.

To address the above technical problem, the embodiments of the present disclosure provide a communication method, the concept of which is as follows: in a process in which a terminal switches from a source base station to a target base station, the terminal sends first QoE configuration information configured for the terminal by the source base station to the target base station, so that the target base station configures second QoE configuration information according to the first QoE configuration information and sends the second QoE configuration information to the terminal, which enables the terminal to perform QoE measurement according to the second QoE configuration information, ensures the continuity of QoE measurement, guarantees the integrity of QoE reports, improves QoE measurement efficiency in the mobility scenario, and enhances user experience.

The communication system provided in the embodiments of the present disclosure is introduced belowin conjunction with the drawings of the specification.

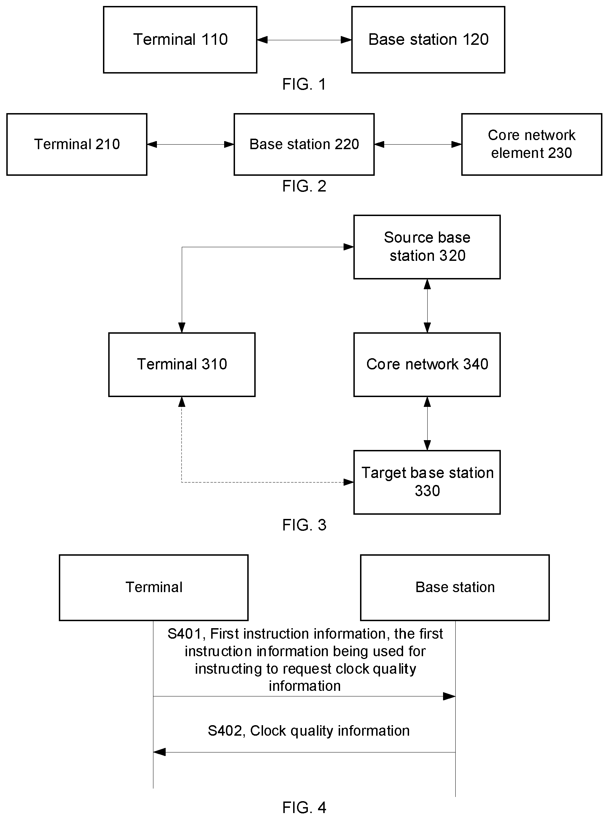

Referring to FIG.1, FIG. 1 is a schematic diagram of an architecture of a communication system provided in the embodiments of the present disclosure. As shown in FIG. 1, the communication system includes: a terminal 110 and a base station 120.

The terminal 110 is used to acquire clock quality information from the base station 120.

In some embodiments, when a radio resource control (RRC) connection is established between the terminal 110 and the base station 120 (i.e., when the terminal 110 is in the RRC connected state (RRC_CONNECT)), the terminal 110 obtains clock quality information from the base station 120.

In some embodiments, in a case where no RRC connection is established between the terminal 110 and the base station 120 (i.e., in a case where the terminal 110 is in an RRC inactive state (RRC_INACTIVE) or an RRC idle state (RRC_IDLE)), the terminal 110 may also acquire the clock quality information from the base station 120.

The base station 120 is used to send the clock quality information to the terminal 110.

In some embodiments, the base station 120 is also used to send a paging message to the terminal 110 when the clock information changes. Herein, the paging message is used to inform the terminal 110 that the clock information has changed and to trigger the terminal 110 to initiate a clock acquisition request.

Referring to FIG. 2, FIG. 2 is a schematic diagram of an architecture of another communication system provided in the embodiments of the present disclosure. As shown in FIG. 2, the communication system includes: a terminal 210, a base station 220 and a core network element 230.

The terminal 210 is used to perform a QoE measurement and a radio access network (RAN) visualized QoE (RVQoE) measurement task.

In some embodiments, the terminal 210 is further used to send capability information of the terminal 210 to base station 220. Exemplarily, the capability information is used to indicate that the terminal 210 has an ability to perform QoE measurement.

In some embodiments, the terminal 210 may be used to perform a QoE measurement task according to QoE configuration information sent from the base station 220.

The base station 220 is used to acquire QoE configuration information from the core network element 230 and send the QoE configuration information to the terminal 210.

In some embodiments, the base station 220 may be used to receive the capability information sent from the terminal 210, determine whether the terminal 210 has the ability to perform the QoE measurement, and then, in a case where the base station 220 receives a related QoE measurement task, the base station 220 may send the QoE configuration information of the QoE measurement task to the terminal 210.

The core network element 230 is used to send the QoE configuration information to base station 220.

In some embodiments, the core network element 230 may be used to detect whether there is a QoE measurement task for a related service in the network, and in a case where there is a QoE measurement task for a related service in the network, the core network element 230 may send the QoE configuration information of the QoE measurement task to the base station 220.

Exemplarily, the above core network element 230 may be an access and mobility management function (AMF).

Referring to FIG. 3, FIG. 3 is a schematic diagram of an architecture of yet another communication system provided in the embodiments of the present disclosure. As shown in FIG. 3, the communication system includes: a terminal 310, a source base station 320, a target base station 330 and a core network 340.

The terminal 310 is used to perform a QoE measurement task.

In some embodiments, the terminal 310 performs the QoE measurement task based on the QoE configuration information, where the QoE configuration information is configured by the base station.

In some embodiments, the terminal 310 may hand over from the source base station 320 to the target base station 330.

The source base station 320 is used to send a handover request to the target base station 330 through the core network 340 when the terminal 310 hands over from the source base station 320 to the target base station 330.

The target base station 330 is used to send a handover request reply message to the source base station 320 through the core network 340 when the target base station 330 receives the handover request message sent from the source base station 320.

The core network 340 is used for forwarding information.

In some embodiments, the core network 340 is used to receive a handover required message sent from the source base station 320 and send a handover request message to the target base station 330; and to receive a handover request reply message sent from the target base station 330 and send a handover command to the source base station 320.

In some embodiments, the core network 340 is further used to receive a dedicated signaling sent from the target base station 330 and send the dedicated signaling to the source base station 320.

Exemplarily, the above core network 340 may be a network element in the core network 340.

Exemplarily, the above terminal (including: the terminal 110, the terminal 210 or the terminal 310) may be a mobile phone, a tablet computer, a desktop computer, a laptop computer, a handheld computer, a notebook computer, an ultra-mobile personal computer (UMPC), a netbook, as well as a cellular phone, a personal digital assistant (PDA), an augmented reality (AR)/virtual reality (VR) device, etc. The embodiments of the present disclosure do not impose a specific limitation on a specific form of the terminal.

It should be noted that, the system architectures and the application scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the system architectures and the emergence of new service scenarios, the technical solutions provided in the embodiments of the present disclosure are also applicable to similar technical problems.

The communication method provided in the embodiments of the present disclosure is introduced below.

As shown in FIG. 4, the communication method provided in the embodiments of the present disclosure is applied to the communication system shown in FIG. 1 and the method may at least include S401 to S402.

In S401, a terminal sends first indication information to a base station. Correspondingly, the base station receives the first indication information sent from the terminal.

Herein, the first indication information is used to indicate that clock quality information is requested.

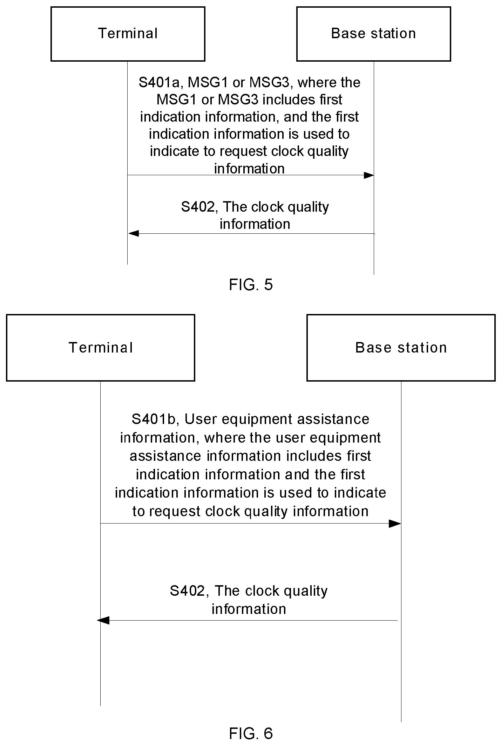

In some embodiments, as shown in FIG. 5, the above step S401 may be implemented as the step S401a as follows.

In S401a, a terminal sends an MSG1 or MSG3 to a base station in a random access process, where the MSG1 or MSG3 includes first indication information, and the first indication information is used to indicate to request clock quality information. Correspondingly, the base station receives the MSG1 or MSG3 sent from the terminal and acquires the first indication information from the MSG1 or MSG3.

It can be understood that, the random access process may be a two-step random access process or a four-step random access process. Exemplarily, in the two-step random access process, the terminal sends the MSG1 to the base station, and the MSG1 includes the first indication information. In the four-step random access process, the terminal sends the MSG3 to the base station, and the MSG3 includes the first indication information.

In some embodiments, the base station may send a reference clock-related event identifier in a broadcast manner; correspondingly, the terminal receives the reference clock-related event identifier sent from the base station, and in a case where the reference clock-related event identifier sent from the base station is different from the reference clock-related event identifier stored in the terminal, the terminal sends the first indication information to the base station to request the clock quality information.

It can be understood that, in a case where the reference clock-related event identifier sent from the base station is different from the reference clock-related event identifier stored in the terminal, it means that the clock quality information stored in the terminal needs to be updated, therefore, the terminal may actively send the first indication information to the base station to request the clock quality information, to acquire new clock quality information.

In some embodiments, as shown in FIG. 6, the above step S401 may be implemented as the step S401b as follows.

In S401b, a terminal sends user equipment assistance information (UE Assistance Information) to a base station. Correspondingly, the base station receives the user equipment assistance information sent from the terminal to the base station.

The user equipment assistance information includes first indication information and second indication information; the first indication information is used to indicate to request the clock quality information; and the second indication information is used to indicate that the clock quality information has changed.

Exemplarily, the user equipment assistance information includes resume cause information, and the resume cause information may include the first indication information and the second indication information.

It can be understood that, the base station may know that the clock quality information of the terminal has changed according to the second indication information included in the user equipment assistance information, and then actively send the clock quality information to the terminal according to the first indication information included in the user equipment assistance information.

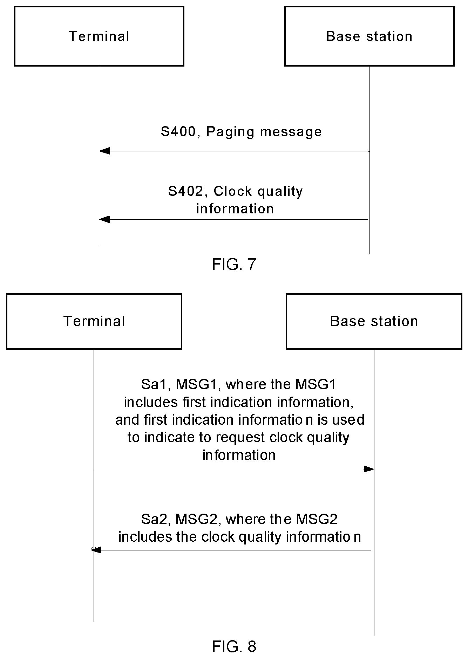

In some embodiments, as shown in FIG. 7, the above method further includes the step S400 as follows.

In S400, a base station sends a paging message to a terminal. Correspondingly, the terminal receives the paging message sent from the base station.

The paging message includes at least one of: second indication information, third indication information, or fourth indication information. The second indication information is used to indicate that the clock quality information has changed; the third indication information is used to trigger the terminal to initiate a two-step random access process; and the fourth indication information is used to trigger the terminal to initiate a four-step random access process.

It can be understood that, when the base station detects that the clock quality information has changed, it may actively initiate the paging message to trigger the terminal to acquire the clock quality information from the base station, to update the clock quality information stored in the terminal.

In S402, the base station sends clock quality information to the terminal. Correspondingly, the terminal receives the clock quality information sent from the base station.

The above clock quality information includes at least one of: a time source, a synchronization state, a clock type, a clock accuracy, reference clock information, or a reference report identifier.

In some embodiments, the above step S401 may be implemented as that: the base station sends a message (MSG) 2 or MSG4 to the terminal in the random access process, where the MSG2 or MSG4 includes the clock quality information. Correspondingly, the terminal receives the MSG2 or MSG4 sent from the base station, and then acquires the clock quality information from the MSG2 or MSG4.

In the above random access process, the terminal is in the RRC_INACTIVE state.

As a possible implementation, the MSG2 or MSG4 includes a packet for small data transmission (SDT), and the packet for small data transmission includes the clock quality information.

As another possible implementation, the MSG2 or MSG4 includes a downlink information transfer (DL) signaling, and the downlink information transfer signaling includes the clock quality information.

It can be understood that, the above random access process may be a two-step random access process or a four-step random access process. Exemplarily, in the two-step random access process, the base station sends the MSG2 to the terminal, and the MSG2 includes the clock quality information. In the four-step random access process, the base station sends the MSG4 to the terminal, and the MSG4 includes the clock quality information.

It can be understood that, in the communication method provided in the embodiments of the present disclosure, the terminal is enabled to acquire the clock quality information in the RRC_INACTIVE state by carrying the clock quality information in the SDT or the downlink information transfer signaling, which solves the technical problem that the terminal has to enter the RRC_CONNECT state to acquire the clock quality information, thereby reducing latency and saving power consumption of the terminal.

In some embodiments, the above step S402 may be implemented as that: the terminal, after entering the RRC_CONNECT state, receives the clock quality information sent from the base station.

Exemplarily, the terminal may enter the RRC_CONNECT state by actively initiating an RRC establishment or an RRC re-establishment.

In some embodiments, in a case where the terminal is in the non-connected state (e.g., the RRC_IDL state or the RRC_INACTIVE state), the base station may send a reference clock-related event identifier in a broadcast manner; correspondingly, the terminal receives the reference clock-related event identifier sent from the base station, and in a case where the reference clock-related event identifier sent from the base station is different from the reference clock-related event identifier stored in the terminal, the terminal hands over from the non-connected state to the connected state, to acquire the clock quality information sent from the base station.

For ease of understanding, the communication method provided in the embodiments of the present disclosure is described below by taking different scenarios as examples, respectively.

Scenario 1, acquire the clock quality information in a two-step random access process.

Exemplarily, as shown in FIG. 8, in Scenario 1, the communication method provided in the embodiments of the present disclosure at least may be implemented as Sa1 to Sa2.

In Sa1, a terminal sends an MSG1 to a base station, where the MSG1 includes first indication information, and first indication information is used to indicate to request clock quality information. Correspondingly, the base station receives the MSG1 sent from the terminal, to acquire the first indication information from the MSG1.

In Sa2, the base station sends an MSG2 to the terminal, where the MSG2 includes the clock quality information. Correspondingly, the terminal receives the MSG2 sent from the base station, to acquire the clock quality information from the MSG2.

Exemplarily, the MSG2 includes a packet for SDT, the packet for SDT includes the clock quality information; or, the MSG2 includes a downlink information transfer signaling, and the downlink information transfer signaling includes the clock quality information.

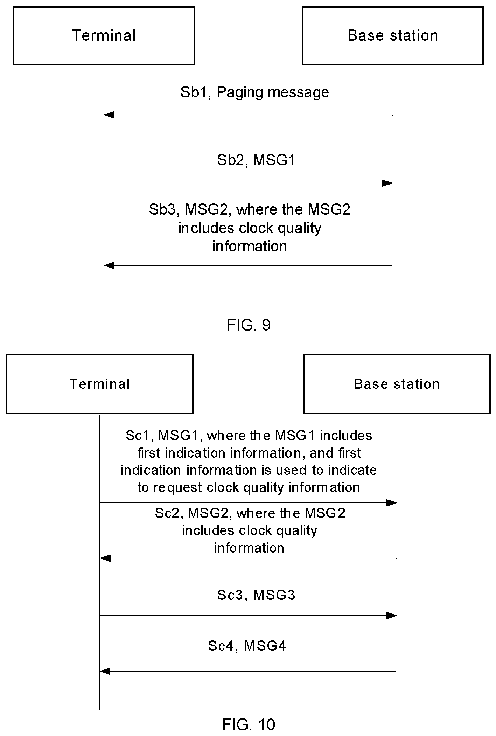

Exemplarily, as shown in FIG. 9, in Scenario 1, the communication method provided in the embodiments of the present disclosure at least further may be implemented as Sb1 to Sb3.

In Sb1, a base station sends a paging message to a terminal. Correspondingly, the terminal receives the paging message sent from the base station.

The paging message includes: second indication information and third indication information.

It can be understood that, the terminal, after receiving the paging message, knows that the clock quality information has changed based on the second indication information in the paging message; and triggers the two-step random access process based on the third indication information in the paging message, to acquire new clock quality information.

In Sb2, the terminal sends an MSG1 to the base station. Correspondingly, the base station receives the MSG1 sent from the terminal.

In Sb3, the base station sends an MSG2 to the terminal, where the MSG2 includes clock quality information. Correspondingly, the terminal receives the MSG2 sent from the base station, to acquire the clock quality information from the MSG2.

Exemplarily, for the exemplary implementation of the step Sb3, reference may be made to the above step Sa2, which will not be repeated herein.

Scenario 2, acquire the clock quality information in a four-step random access process.

Exemplarily, as shown in FIG. 10, in Scenario 2, the communication method provided in the embodiments of the present disclosure at least may be implemented as Sc1 to Sc4.

In Sc1, a terminal sends an MSG1 to a base station, where the MSG1 includes first indication information, and first indication information is used to indicate to request clock quality information. Correspondingly, the base station receives the MSG1 sent from the terminal, to acquire the first indication information from the MSG1.

In Sc2, the base station sends an MSG2 to the terminal, where the MSG2 includes the clock quality information. Correspondingly, the terminal receives the MSG2 sent from the base station, to acquire the clock quality information from the MSG2.

Exemplarily, the MSG2 includes a packet for SDT, the packet for SDT includes the clock quality information; or, the MSG2 includes a downlink information transfer signaling, and the downlink information transfer signaling includes the clock quality information.

In Sc3, the terminal sends an MSG3 to the base station. Correspondingly, the base station receives the MSG3 sent from the terminal.

In Sc4, the base station sends an MSG4 to the terminal. Correspondingly, the terminal receives the MSG4 sent from the base station.

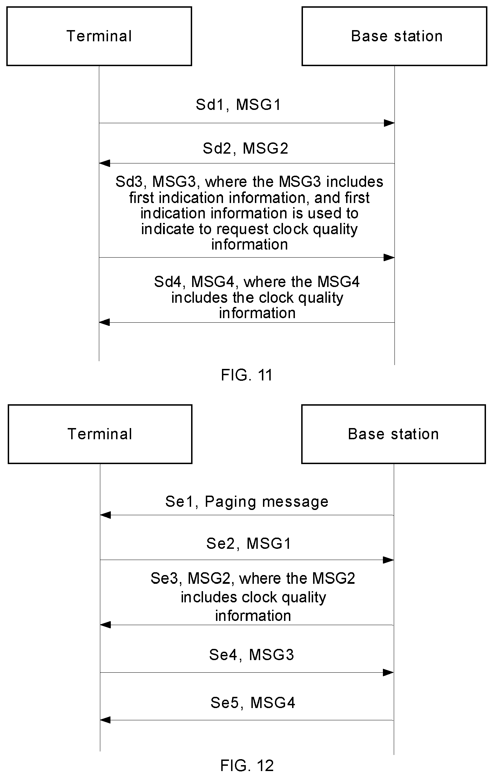

Exemplarily, as shown in FIG. 11, in Scenario 2, the communication method provided in the embodiments of the present disclosure at least further may be implemented as Sd1 to Sd4.

In Sd1, the terminal sends an MSG1 to the base station. Correspondingly, the base station receives the MSG1 sent from the terminal.

In Sd2, the base station sends an MSG2 to the terminal. Correspondingly, the terminal receives the MSG2 sent from the base station.

In Sd3, the terminal sends an MSG3 to the base station, where the MSG3 includes first indication information, and first indication information is used to indicate to request clock quality information. Correspondingly, the base station receives the MSG3 sent from the terminal, to acquire the first indication information from the MSG3.

In Sd4, the base station sends an MSG4 to the terminal, where the MSG4 includes the clock quality information. Correspondingly, the terminal receives the MSG4 sent from the base station, to acquire the clock quality information from the MSG4.

Exemplarily, as shown in FIG. 12, in Scenario 2, the communication method provided in the embodiments of the present disclosure at least further may be implemented as Sd1 to Sd4.

In Se1, a base station sends a paging message to a terminal. Correspondingly, the terminal receives the paging message sent from the base station.

The paging message includes: second indication information and fourth indication information.

It can be understood that, the terminal, after receiving the paging message, knows that the clock quality information has changed based on the second indication information in the paging message; and triggers the four-step random access process based on the fourth indication information in the paging message, to acquire new clock quality information.

In Se2, the terminal sends an MSG1 to the base station. Correspondingly, the base station receives the MSG1 sent from the terminal.

In Se3, the base station sends an MSG2 to the terminal, where the MSG2 includes clock quality information. Correspondingly, the terminal receives the MSG2 sent from the base station, to acquire the clock quality information from the MSG2.

In Se4, the terminal sends an MSG3 to the base station. Correspondingly, the base station receives the MSG3 sent from the terminal.

In Se5, the base station sends an MSG4 to the terminal. Correspondingly, the terminal receives the MSG4 sent from the base station.

It can be understood that, the above embodiments are explained by taking an example in which the base station carries the clock quality information in the MSG2. In some embodiments, the base station may also carry the clock quality information in the MSG4, which will not be elaborated herein.

Scenario 3, the terminal acquires the clock quality information when it enters the connected state.

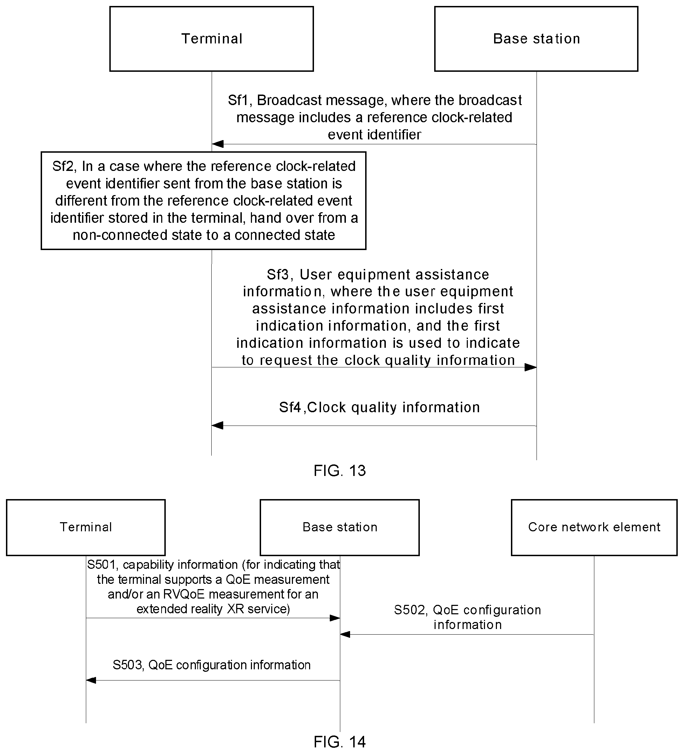

Exemplarily, as shown in FIG. 13, in Scenario 2, the communication method provided in the embodiments of the present disclosure at least may be implemented as Sf1 to Sf4.

In Sf1, a base station sends a broadcast message, where the broadcast message includes a reference clock-related event identifier. Correspondingly, the terminal receives the broadcast message sent from the base station and acquires the reference clock-related event identifier from the broadcast message.

In Sf2, in a case where the reference clock-related event identifier sent from the base station is different from the reference clock-related event identifier stored in the terminal, the terminal hands over from a non-connected state to a connected state.

Sf3, the terminal sends user equipment assistance information to the base station. Correspondingly, the base station receives the user equipment assistance information sent from the terminal to the base station.

The user equipment assistance information includes first indication information or second indication information; the first indication information is used to indicate to request the clock quality information; and the second indication information is used to indicate that the clock quality information has changed.

In Sf4, the base station sends clock quality information to the terminal. Correspondingly, the terminal receives the clock quality information sent from the base station.

It can be understood that, in a case where the reference clock-related event identifier sent from the base station is different from the reference clock-related event identifier stored in the terminal, the terminal hands over from a non-connected state to a connected state, to acquire the clock quality information. Meanwhile, in order for the base station to identify that the terminal has entered the connected state to acquire clock quality information, the terminal may send the user equipment assistance information (including the first indication information or second indication information) to the base station so that the base station may send the clock quality information to the terminal.

As shown in FIG. 14, the communication method provided in the embodiments of the present disclosure is applied to the communication system shown in FIG. 2 and the method may at least include S501 to S503.

In S501, a terminal sends capability information to a base station. Correspondingly, the base station receives the capability information sent from the terminal.

The capability information is used to indicate that the terminal supports a QoE measurement and/or an RVQoE measurement for an extended reality (XR) service.

In some embodiments, the above capability information includes QoE configuration parameters (QoE-Parameters), where the QoE-Parameters include XR service types.

It can be understood that, the base station knows that the terminal supports the QoE measurement and/or RVQoE measurement for the XR service based on the capability information sent from the terminal. Thus, when the base station receives a QoE measurement task and/or an RVQoE measurement task for the XR service, it may forward the QoE measurement task and/or RVQoE measurement task to the terminal to indicate the terminal to perform the QoE measurement and/or RVQoE measurement for the XR service.

In S502, a core network element sends QoE configuration information to the base station. Correspondingly, the base station receives the QoE configuration information sent from the core network element.

In some embodiments, the above QoE configuration information includes: XR service type indication information, where the XR service type indication information is used to indicate an XR service type that the terminal performs the QoE measurement and/or the RVQoE measurement.

It can be understood that, in the embodiments of the present disclosure, the XR service type indication information may be carried in the QoE configuration information. In this way, the base station may determine that the measurement task corresponding to the QoE configuration information is for XR service, and then allocate a terminal that supports the QoE measurement and/or RVQoE measurement for XR service to the measurement task.

In some embodiments, since XR services require the frequent update and tight synchronization of one or more downlink (DL) video streams and motion or control data in the uplink (UL), the QoE configuration information may further include at least one of the following measurement metrics: monocular resolution, field of view, angular resolution, 360° panoramic resolution, a multi-path transmission latency, bit rate, and immersion degree.

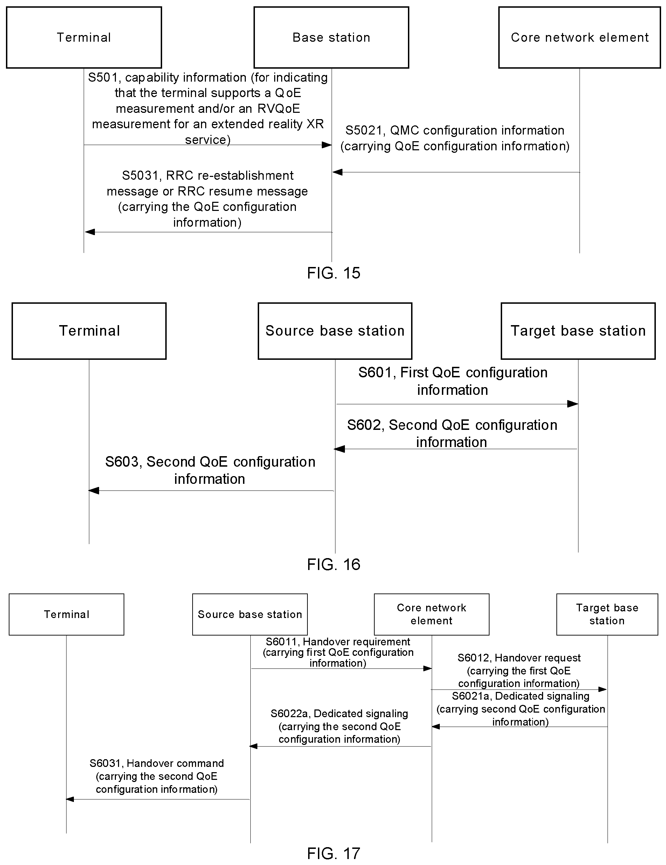

In some embodiments, as shown in FIG. 15, the above step S502 may be implemented as the step S5021 as follows.

In S5021, a core network element sends quality of experience measurement collection (QMC) configuration information to the base station, where QMC configuration information carries the QoE configuration information.

In S503, the base station sends the QoE configuration information to the terminal. Correspondingly, the terminal receives the QoE configuration information sent from the base station.

In some embodiments, as shown in FIG. 15, the above step S503 may be implemented as the step S5031 as follows.

In S5031, the base station sends an RRC re-establishment message or an RRC resume message to the terminal, where the RRC re-establishment message or RRC resume message carries the QoE configuration information.

In some embodiments, the terminal performs QoE measurement and/or RVQoE measurement on an XR service based on the QoE configuration information sent from the base station.

It can be understood that, in the communication method provided in the embodiments of the present disclosure, the terminal may send the capability information (for indicating that the terminal supports the QoE measurement and/or RVQoE measurement for XR services) to the base station so that the base station may know the measurement capability of the terminal. In this way, when the base station receives a QoE measurement task and/or an RVQoE measurement task for XR services, it may indicate the terminal to perform measurement.

As shown in FIG. 16, the communication method provided in the embodiments of the present disclosure is applied to the communication system shown in FIG. 3 and the method may at least include S601 to S603.

In S601, a source base station sends first QoE configuration information to a target base station. Correspondingly, the target base station receives the first QoE configuration information sent from the source base station.

The above first QoE configuration information is the QoE configuration information configured by the source base station for the QoE measurement task being performed by the terminal.

Exemplarily, the first QoE configuration information may include at least one of: a service type, a measurement configuration application layer container, a measurement matrix, a reporting server information, a reporting interval, a QoE measurement collection identifier for a session, and QoE area range information.

In some embodiments, the above S601 may be implemented as that: a source base station sends first QoE configuration information to a target base station through a core network element. Correspondingly, the target base station receives the first QoE configuration information sent from the source base station through the core network element.

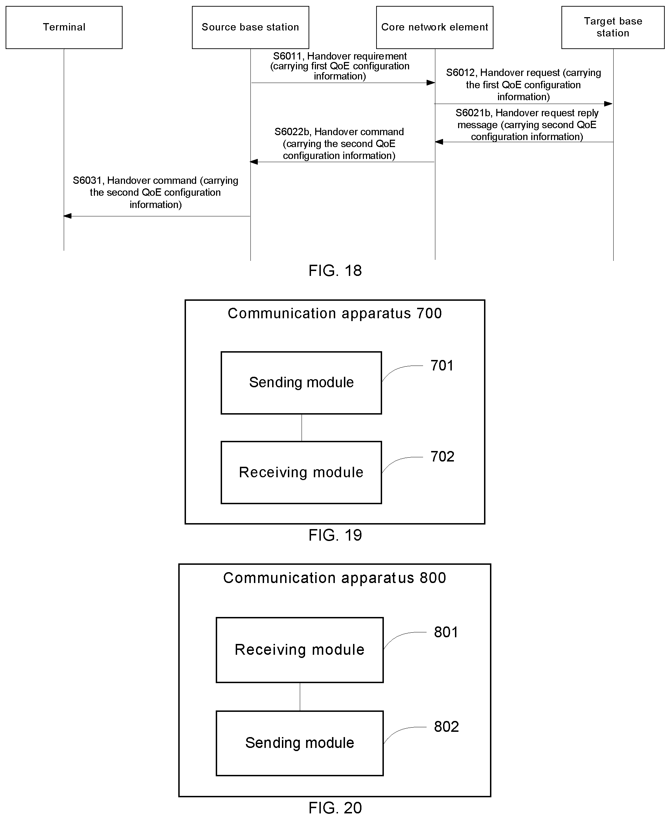

Exemplary, as shown in FIG. 17 or FIG. 18, the above step S601 may be implemented as the step S6011 to step S6012 as follows.

In S6011, a source base station sends a handover requirement to a core network element, where the handover requirement carries first QoE configuration information.

In S6012, the core network element sends a handover request to a target base station, where the handover request carries the first QoE configuration information. Correspondingly, the target base station receives the handover request sent from the core network element and acquires the first QoE configuration information from the handover request.

In S602, the target base station sends second QoE configuration information to the source base station. Correspondingly, the source base station receives the second QoE configuration information sent from the target base station.

The above second QoE configuration information is the QoE configuration information that needs continuous measurement, configured by the target base station for the QoE measurement task being performed by the terminal according to the first QoE configuration information.

Exemplarily, the second QoE configuration information may include at least one of: a service type, a measurement configuration application layer container, a measurement matrix, a reporting server information, a reporting interval, a QoE measurement collection identifier for a session, and QoE area range information.

In some embodiments, the above S602 may be implemented as that: the target base station sends second QoE configuration information to the source base station through the core network element. Correspondingly, the source base station receives the second QoE configuration information sent from the target base station through the core network element.

Exemplary, as shown in FIG. 17, the above step S602 may be implemented as the step S6021a to step S6022a as follows.

In S6021a, the target base station sends a dedicated signaling to the core network element, where the dedicated signaling carries second QoE configuration information.

In S6022a, the core network element sends the dedicated signaling to the source base station, where the dedicated signaling carries the second QoE configuration information. Correspondingly, the source base station receives the dedicated signaling sent from the core network element and acquires the second QoE configuration information from the dedicated signaling.

Exemplary, as shown in FIG. 18, the above step S602 may be implemented as the step S6021b to step S6022b as follows.

In S6021b, the target base station sends a handover request reply message to the core network element, where the handover request reply message carries second QoE configuration information.

In S6022b, the core network element sends a handover command to the source base station, where the handover command carries the second QoE configuration information. Correspondingly, the source base station receives the handover command sent from the core network element and acquires the second QoE configuration information from the handover command.

In S603, the source base station sends the second QoE configuration information to the terminal. Correspondingly, the terminal receives the second QoE configuration information sent from the source base station.

In some embodiments, as shown in FIG. 17 and FIG. 18, the above step S603 may be implemented as the step S6031 as follows.

In S6031, the source base station sends a handover command to the terminal, where the handover command includes the second QoE configuration information.

Correspondingly, the terminal receives the handover command sent from the source base station, and in response to that the handover command hands over from the source base station to the target base station, and performs QoE measurement based on the second QoE configuration information carried in the handover command.

It can be understood that, based on the communication method provided in the embodiments of the present disclosure, in the process of handing over from a source base station to a target base station, the terminal sends first QoE configuration information configured by the source base station for the ongoing QoE measurement task of the terminal to the target base station, so that the target base station configures second QoE configuration information according to the first QoE configuration information and sends the second QoE configuration information to the terminal, which enables the terminal to perform QoE measurement according to the second QoE configuration information, ensures the continuity of QoE measurement, guarantees the integrity of QoE reports, improves QoE measurement efficiency in the mobility scenario, and enhances user experience.

The above introduces the solutions of the embodiments of the present disclosure mainly from the perspective of methods. It can be understood that, in order to implement the above functions, a communication apparatus contains at least one of corresponding hardware structures and software modules for performing various functions. Those skilled in the art should easily realize that the embodiments of the present disclosure can be implemented in the form of hardware or a combination of hardware and computer software, in combination with the units and algorithm steps of various examples described in the embodiments disclosed herein. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the embodiments of the present disclosure.

It can be understood that, in order to implement the above functions, a communication apparatus contains corresponding hardware structures and/or software modules for performing various functions. Those skilled in the art should easily realize that the present disclosure can be implemented in the form of hardware or a combination of hardware and computer software, in combination with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such implementation should not be considered beyond the scope of the present disclosure.

In the embodiments of the present disclosure, the communication apparatus may be divided into functional modules according to the above-mentioned method embodiments, and for example, each functional module may be divided corresponding to each function, or two or more functions may also be integrated into one functional module. The above integrated module is implemented in the form of hardware or in the form of software. It should be noted that the division of the modules in embodiments of the present disclosure is schematic, which is only a logical functional division, and there may be other divisions for in actual implementations. The example in which each functional module is divided corresponding to each function, is taken for explanation below.

FIG. 19 is a structural schematic diagram of a communication apparatus, provided in the embodiments of the present disclosure, and the communication apparatus is applied to a terminal and may perform the communication method provided in the above method embodiments. As shown in FIG. 19, the communication apparatus 700 includes a sending module 701 and a receiving module 702.

The sending module 701, is configured to send first indication information to a base station; where the first indication information is used to indicate to request clock quality information.

The receiving module 702, is configured to receive the clock quality information sent from the base station.

In some embodiments, the receiving module 702, may be configured to receive a message 2 (MSG2) or a message 4 (MSG4) sent from the base station in a random access process, where the MSG2 or MSG4 includes the clock quality information.

In some embodiments, the MSG2 or MSG4 includes a packet for small data transmission, and the packet for small data transmission includes the clock quality information; or the MSG2 or MSG4 includes a downlink information transfer signaling, and the downlink information transfer signaling includes the clock quality information.

In some embodiments, the sending module 701, may be configured to send an MSG1 or an MSG3 to the base station, where the MSG1 or MSG3 includes the first indication information.

In some embodiments, the receiving module 702, is further configured to receive a paging message sent from the base station, where the paging message includes at least one of: second indication information, third indication information, or fourth indication information; where the second indication information is used to indicate that the clock quality information has changed; the third indication information is used to trigger the terminal to initiate a two-step random access process; and the fourth indication information is used to trigger the terminal to initiate a four-step random access process.

In some embodiments, the sending module 701, may be configured to send user equipment assistance information to the base station, where the user equipment assistance information includes the first indication information and second indication information; and the second indication information is used to indicate that the clock quality information has changed.

In some embodiments, the clock quality information includes at least one of: a time source, a synchronization state, a clock type, a clock accuracy, reference clock information, or a reference report identifier.

FIG. 20 is a structural schematic diagram of another communication apparatus, provided in the embodiments of the present disclosure, and the communication apparatus is applied to a base station and may perform the communication method provided in the above method embodiments. As shown in FIG. 20, the communication apparatus 800 includes a receiving module 801 and a sending module 802.

The receiving module 801, is configured to receive first indication information sent from a terminal; where the first indication information is used to indicate to request clock quality information.

The sending module 802, is configured to send the clock quality information to the terminal.

In some embodiments, the sending module 802, may be configured to send a message 2 (MSG2) or a message 4 (MSG4) to the terminal in a random access process, where the MSG2 or MSG4 includes the clock quality information.

In some embodiments, the MSG2 or MSG4 includes a packet for small data transmission, and the packet for small data transmission includes the clock quality information; or the MSG2 or MSG4 includes a downlink information transfer signaling, and the downlink information transfer signaling includes the clock quality information.

In some embodiments, the receiving module 801, may be configured to receive an MSG1 or an MSG3 sent from the terminal, where the MSG1 or MSG3 includes the first indication information.

In some embodiments, the sending module 802, is further configured to send a paging message to the terminal, where the paging message includes at least one of: second indication information, third indication information, or fourth indication information; where the second indication information is used to indicate that the clock quality information has changed; the third indication information is used to trigger the terminal to initiate a two-step random access process; and the fourth indication information is used to trigger the terminal to initiate a four-step random access process.

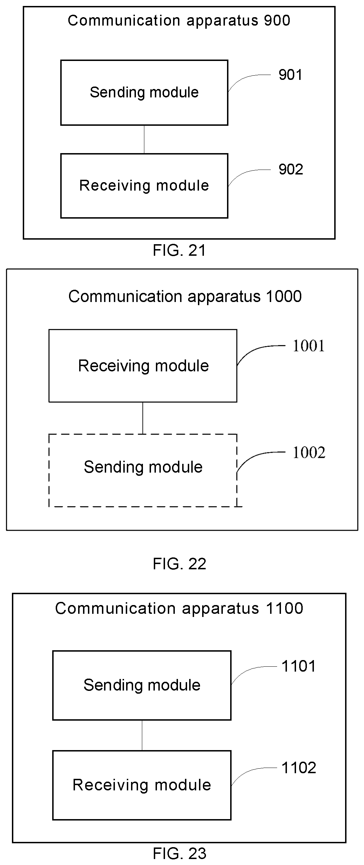

FIG. 21 is a structural schematic diagram of yet another communication apparatus, provided in the embodiments of the present disclosure, and the communication apparatus is applied to a terminal and may perform the communication method provided in the above method embodiments. As shown in FIG. 21, the communication apparatus 900 includes a sending module 901 and a receiving module 902.

The sending module 901, is configured to send capability information to a base station, where the capability information is used to indicate that the terminal supports a QoE measurement and/or an RVQoE measurement for an extended reality (XR) service.

The receiving module 902, is configured to receive the quality of experience (QoE) configuration information sent from the base station.

In some embodiments, the quality of experience (QoE) configuration information includes: XR service type indication information, where the XR service type indication information is used to indicate an XR service type that the terminal performs the QoE measurement and/or the RVQoE measurement.

FIG. 22 is a structural schematic diagram of yet another communication apparatus, provided in the embodiments of the present disclosure, and the communication apparatus is applied to a base station and may perform the communication method provided in the above method embodiments. As shown in FIG. 22, the communication apparatus 1000 includes a receiving module 1001. In some other embodiments, the communication apparatus 1000 includes a sending module 1002.

The receiving module 1001, is configured to receive capability information sent from a terminal, where the capability information is used to indicate that the terminal supports a QoE measurement and/or an RVQoE measurement for an XR service.

The receiving module 1001, is further configured to receive QoE configuration information sent from a core network element.

In some embodiments, the QoE configuration information includes: XR service type indication information, where the XR service type indication information is used to indicate an XR service type that the terminal performs the QoE measurement and/or the RVQoE measurement.

In some embodiments, the sending module 1002, is configured to send the XR service type indication information to the terminal.

FIG. 23 is a structural schematic diagram of yet another communication apparatus, provided in the embodiments of the present disclosure, and the communication apparatus is applied to a source base station and may perform the communication method provided in the above method embodiments. As shown in FIG. 23, the communication apparatus 1100 includes a sending module 1101 and a receiving module 1102.

The sending module 1101, is configured to send first QoE configuration information to a target base station.

The receiving module 1102, is configured to receive second QoE configuration information sent from the target base station.

The sending module 1101, is further configured to send the second QoE configuration information to a terminal.

In some embodiments, the sending module 1101, may be configured to send the first QoE configuration information to the target base station through a core network element.

In some embodiments, the receiving module 1102, may be configured to receive the second QoE configuration information sent from the target base station through a core network element.

In some embodiments, the receiving module 1102, may be configured to receive a dedicated signaling sent from the core network element, where the dedicated signaling includes the second QoE configuration information; or receive a handover command sent from the core network element, where the handover command includes the second QoE configuration information.

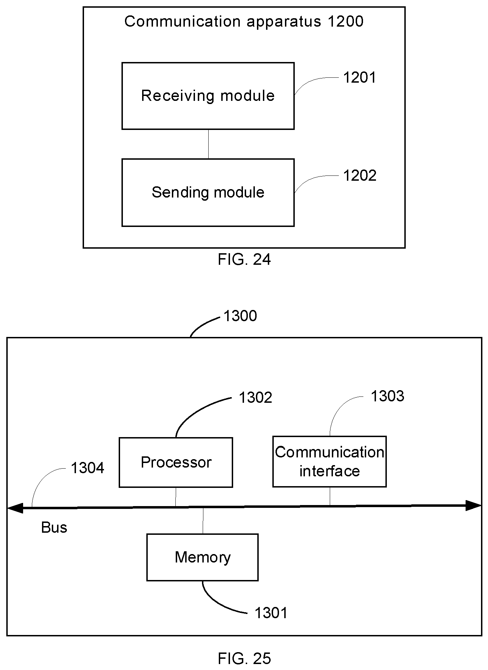

FIG. 24 is a structural schematic diagram of yet another communication apparatus, provided in the embodiments of the present disclosure, and the communication apparatus is applied to a target base station and may perform the communication method provided in the above method embodiments. As shown in FIG. 24, the communication apparatus 1200 includes a receiving module 1201 and a sending module 1202.

The receiving module 1201, is configured to receive first QoE configuration information sent from a source base station.

The sending module 1202, is configured to send second QoE configuration information to the source base station.

In some embodiments, the receiving module 1201, may be configured to receive the first QoE configuration information sent from the source base station through a core network element.

In some embodiments, the sending module 1202, may be configured to send the second QoE configuration information to the source base station through a core network element.

In some embodiments, the sending module 1202, may be configured to send a dedicated signaling to the core network element, where the dedicated signaling includes the second QoE configuration information; or send a handover request reply message to the core network element, where the handover request reply message includes the second QoE configuration information.

In a case of implementing the functions of the integrated modules mentioned above in the form of hardware, the embodiments of the present disclosure provide another possible structure of a communication apparatus involved in the above embodiments. As shown in FIG. 25, the communication apparatus 1300 includes a processor 1302 and a bus 1304. In some embodiments of the present disclosure, the communication apparatus 1300 may further include a memory 1301; in some embodiments of the present disclosure, the communication apparatus 1300 may further include a communication interface 1303.

The processor 1302 may be modules and circuits that implement or perform various exemplary logical blocks described in conjunction with the embodiments of the present disclosure. The processor 1302 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the embodiments of the present disclosure. The processor 1302 may also be a combination that implements computing functions, for example, including a combination of one or more microprocessors, a combination of a digital signal processor (DSP) and a microprocessor, or the like.

The communication interface 1303 is configured to connect with other devices via a communication network. The communication network may be an Ethernet, a radio access network, a wireless local area network (WLAN), or the like.

The memory 1301 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 1301 may exist independently of the processor 1302, and the memory 1301 may be connected to the processor 1302 via the bus 1304 and is used for storing instructions or program codes. The processor 1302, when calling and executing the instructions or program codes stored in the memory 1301, is capable of implementing the communication method provided in the embodiments of the present disclosure.

As another possible implementation, the memory 1301 may also be integrated with the processor 1302.

The bus 1304 may be an extended industry standard architecture (EISA) bus or the like. Buses 1304 may be divided into address buses, data buses, control buses, and the like. For ease of representation, only one bold line is used for the representation in FIG. 25, but it does not mean that there is only one bus or one type of the bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the communication method as described in any embodiment of the above-mentioned embodiments.

Exemplarily, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

Some embodiments of the present disclosure provide a computer program product including instructions, and the computer program product, when running on a computer, causes the computer to perform the communication method as described in any embodiment of the above-mentioned embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A communication method, **characterized in that** the method is applied to a terminal, and comprises:
sending first indication information to a base station; wherein the first indication information is used to indicate to request clock quality information; and
receiving the clock quality information sent from the base station.

2. The method according to claim 1, wherein receiving the clock quality information sent from the base station comprises:
receiving a message 2 (MSG2) or a message 4 (MSG4) sent from the base station in a random access process, wherein the MSG2 or MSG4 comprises the clock quality information.

3. The method according to claim 2, wherein the MSG2 or MSG4 comprises a packet for small data transmission, and the packet for small data transmission comprises the clock quality information; or
the MSG2 or MSG4 comprises a downlink information transfer signaling, and the downlink information transfer signaling comprises the clock quality information.

4. The method according to claim 2, wherein sending the first indication information to the base station comprises:
sending an MSG1 or an MSG3 to the base station, wherein the MSG1 or MSG3 comprises the first indication information.

5. The method according to claim 2, further comprising:
receiving a paging message sent from the base station, wherein the paging message comprises at least one of: second indication information, third indication information, or fourth indication information; wherein the second indication information is used to indicate that the clock quality information has changed; the third indication information is used to trigger the terminal to initiate a two-step random access process; and the fourth indication information is used to trigger the terminal to initiate a four-step random access process.

6. The method according to claim 1, wherein sending the first indication information to the base station comprises:
sending user equipment assistance information to the base station, wherein the user equipment assistance information comprises the first indication information and second indication information; and the second indication information is used to indicate that the clock quality information has changed.

7. The method according to claim 1, wherein the clock quality information comprises at least one of:
a time source, a synchronization state, a clock type, a clock accuracy, reference clock information, or a reference report identifier.

8. A communication method, **characterized in that** the method is applied to a base station, and comprises:
receiving first indication information sent from a terminal; wherein the first indication information is used to indicate to request clock quality information; and
sending the clock quality information to the terminal.

9. The method according to claim 8, wherein sending the clock quality information to the terminal comprises:
sending a message 2 (MSG2) or a message 4 (MSG4) to the terminal in a random access process, wherein the MSG2 or MSG4 comprises the clock quality information.

10. The method according to claim 9, wherein the MSG2 or MSG4 comprises a packet for small data transmission, and the packet for small data transmission comprises the clock quality information; or
the MSG2 or MSG4 comprises a downlink information transfer signaling, and the downlink information transfer signaling comprises the clock quality information.

11. The method according to claim 9, wherein receiving the first indication information sent from the terminal comprises:
receiving an MSG1 or an MSG3 sent from the terminal, wherein the MSG1 or MSG3 comprises the first indication information.

12. The method according to claim 9, further comprising:
sending a paging message to the terminal, wherein the paging message comprises at least one of: second indication information, third indication information, or fourth indication information; wherein the second indication information is used to indicate that the clock quality information has changed; the third indication information is used to trigger the terminal to initiate a two-step random access process; and the fourth indication information is used to trigger the terminal to initiate a four-step random access process.

13. A communication method, **characterized in that** the method is applied to a terminal, and comprises:
sending capability information to a base station, wherein the capability information is used to indicate that the terminal supports a quality of experience (QoE) measurement and/or a radio access network visible (RVQoE) measurement for an extended reality (XR) service; and
receiving QoE configuration information sent from the base station.

14. The method according to claim 13, wherein the QoE configuration information comprises:
XR service type indication information, wherein the XR service type indication information is used to indicate an XR service type that the terminal performs the QoE measurement and/or the RVQoE measurement.

15. A communication method, **characterized in that** the method is applied to a base station, and comprises:
receiving capability information sent from a terminal, wherein the capability information is used to indicate that the terminal supports a quality of experience (QoE) measurement and/or a radio access network visible (RVQoE) measurement for an extended reality (XR) service; and
receiving QoE configuration information sent from a core network element.

16. The method according to claim 15, wherein the QoE configuration information comprises:
XR service type indication information, wherein the XR service type indication information is used to indicate an XR service type that the terminal performs the QoE measurement and/or the RVQoE measurement.

17. The method according to claim 16, further comprising:
sending the XR service type indication information to the terminal.

18. A communication method, **characterized in that** the method is applied to a source base station, and comprises:
sending first QoE configuration information to a target base station;
receiving second QoE configuration information sent from the target base station; and
sending the second QoE configuration information to a terminal.

19. The method according to claim 18, wherein sending the first QoE configuration information to the target base station comprises:
sending the first QoE configuration information to the target base station through a core network element.

20. The method according to claim 18, wherein receiving the second QoE configuration information sent from the target base station comprises:
receiving the second QoE configuration information sent from the target base station through a core network element.

21. The method according to claim 20, wherein receiving the second QoE configuration information sent from the target base station through the core network element comprises:
receiving a dedicated signaling sent from the core network element, wherein the dedicated signaling comprises the second QoE configuration information; or receiving a handover command sent from the core network element, wherein the handover command comprises the second QoE configuration information.

22. A communication method, **characterized in that** the method is applied to a target base station, and comprises:
receiving first QoE configuration information sent from a source base station; and
sending second QoE configuration information to the source base station.

23. The method according to claim 22, wherein receiving the first QoE configuration information sent from the source base station comprises:
receiving the first QoE configuration information sent from the source base station through a core network element.

24. The method according to claim 22, wherein sending the second QoE configuration information to the source base station comprises:
sending the second QoE configuration information to the source base station through a core network element.

25. The method according to claim 24, wherein sending the second QoE configuration information to the source base station through the core network element comprises:
sending a dedicated signaling to the core network element, wherein the dedicated signaling comprises the second QoE configuration information; or sending a handover request reply message to the core network element, wherein the handover request reply message comprises the second QoE configuration information.

26. A communication apparatus, **characterized by** comprising: a processor and a memory for storing instructions executable for the processor;
wherein the processor is configured to execute the instructions, so that the communication apparatus performs the communication method according to any one of claims 1 to 25.

27. A computer readable storage medium, **characterized in that** the computer readable storage medium has stored computer instructions thereon, and the computer instructions, when executed on an electronic device, cause the electronic device to perform the communication method according to any one of claims 1 to 25.
